# EUROPEAN PATENT SPECIFICATION

(11) **EP 3 397 487 B1**
(45) Date of publication and mention of the grant of the patent: **18.03.2020**
(21) Application number: 16831754.3
(22) Date of filing: 22.12.2016
(51) Int. Cl.: B32B 27/08, B32B 27/32, B32B 27/36, B65D 75/58, B32B 15/08

(54) **FLEXIBLE FILM, ENVELOPE OR BAG**
FLEXIBLE FOLIE, HÜLLE ODER BEUTEL
FILM SOUPLE, ENVELOPPE OU SAC

(30) Priority: 29.12.2015 IT UB20159235
(43) Date of publication of application: 07.11.2018
(73) Proprietor: Guala Pack S.p.A., 15073 Castellazzo Bormida (AL) (IT)
(72) Inventor: ZAMMORI, Riccardo, I-29122 Piacenza (IT); BERTOLINI, Ferruccio, I-29122 Piacenza (IT)
(74) Representative: Gualeni, Nadia
(86) International application number: PCT/IB2016/057928
(87) International publication number: WO 2017/115241

(56) References cited:
- US-A- 5 912 070
- US-A1- 2006 046 006
- US-A1- 2006 251 876
- US-A1- 2008 292 225
- US-A1- 2013 279 833
- US-A1- 2014 335 293

## Description

The present invention is defined in the appended claims.

This invention relates to a flexible packaging film, and a bag for easy opening.

The use of flexible films, for example in the form of an envelope, for the containment of products of the cosmetics or food industries is extremely widespread.

With respect to the more traditional glass containers, the use of thin-walled films allows obtaining advantages in terms of both logistics and transport costs, mainly by virtue of the reduced weight and overall dimensions of such films.

The use of copolymers based on cyclic olefins in said films is also known, mainly in order to facilitate a substantially linear tearing upon product opening, without the need for tools.

US2006/046006 describes a flexible multilayer polymeric film for making containers useful for packaging material e.g. drugs, foods and electronics, comprising base polymer layer, cyclic olefin copolymer layer, and vapour deposited layer comprising barrier coating.

In this regard, the authors of this invention have observed that cyclic olefins suffer a progressive and irreversible deterioration in contact with certain categories of product, since such olefins assume a generally rubbery consistency and, as a result of such transformation, no longer correctly perform their tearing-assistance function.

This invention relates to the preceding context, proposing to provide a film and a bag able to dramatically extend the useful life of the cyclic olefins, and thus ensure the film or bag reliable tearing behaviour over time.

This purpose is achieved by means of a film according to claim 1 and by means of a bag according to claim 11. The claims dependent on these show preferred embodiments.

The object of this invention will now be described in detail, with the help of the accompanying drawings, in which:
- Figures 1 and 2 show sections of two different films, object of this invention, according to possible embodiments;
- Figures 3 and 4 illustrate envelopes or bags made with the aforesaid films, according to distinct variants;
- Figure 5 represents the bag of figure 4 during the tearing of a side edge;
- Figure 6 summarises the parameters of a bag involved in the calculation of the divarication value or ratio.

With reference to the accompanying figures, reference number 10 identifies, in its entirety, a flexible packaging film according to this invention.

This film 10 comprises, preferably joined indirectly (in this regard see the following description), the following layers:
- a first layer 4 or outer layer comprising or consisting of polyester;
- a second metallic layer 6, configured to create a barrier through the film 10 with respect to moisture, gases and/or light;
- a third layer 8 comprising or consisting of polyester;
- a fourth layer 12, configured to promote a substantially linear tearing of the film 10 along at least a given tearing direction S and comprising crystallised cyclic olefin copolymers (COC);
- a protective layer 14 or inner layer, comprising or consisting of a thermoplastic polymer (and preferably thermo-weldable), free of crystallised polyolefins and covering at least part of the fourth layer 12 in order to prevent/limit the migration of fatty or oily substances through its thickness, towards the fourth layer 12.

It follows that fats and/or oils, which have been identified as the substances mainly responsible for the rubbery transformation of the cyclic olefins mentioned in the opening, are prevented or limited from reaching the fourth layer, by virtue of the protective layer and related characteristics that act as a barrier to the crossing of its thickness.

Without wishing in any way to provide a scientific explanation of the phenomenon, it is considered that, according to the known technique, the fatty substances penetrate in the films since chemically compatible with the polymeric layers of such films. These substances thus blend and plasticise the crystalline structure of the crystallised polyolefins, forming rubbery structures. In other words, the fatty substances would appear to be suitable to break the crystalline structure of the linearly crystallised polyolefins, making them plastic.

On the contrary, according to this invention, the fatty or oily substances remain confined at a certain distance from the crystallised polyolefins, or have a sufficiently low migration speed as not to impair the crystalline structure of the polyolefin of the fourth layer.

For example, the fourth layer could be apolar. Preferably, the fourth layer 12 comprises the crystallised olefins mixed with polyethylene, low density polyethylene optionally linear, medium density polyethylene optionally linear, high density polyethylene, ultra high molecular weight polyethylene, polypropylene, homopolymer polypropylene, random copolymer polypropylene and combinations thereof.

Merely by way of example, the crystallised olefins could be mixed with the aforesaid polymers in a percentage equal to or less than 99% by weight (%wt), preferably in a percentage comprised in the range 20-50%wt.

According to an embodiment, the overall thickness A of said film 10 is approximately in the range of 70-200 µm.

According to a further embodiment, the protective layer 14 has a thickness comprised in the range of about 10-30 µm. More precisely, the thickness of the protective layer 14 is variable as a function of the concentration of fatty or oily substances intended to come into contact with the flexible film (and thus of the type of product) and/or by virtue of the nature of the selected protective layer.

According to a preferred variant, the second layer 6 comprises or consists of a foil made of aluminium or aluminium alloy.

According to an advantageous variant, the first 4 and/or the third 8 layer comprise or consist of a polyethylene terephthalate (PET).

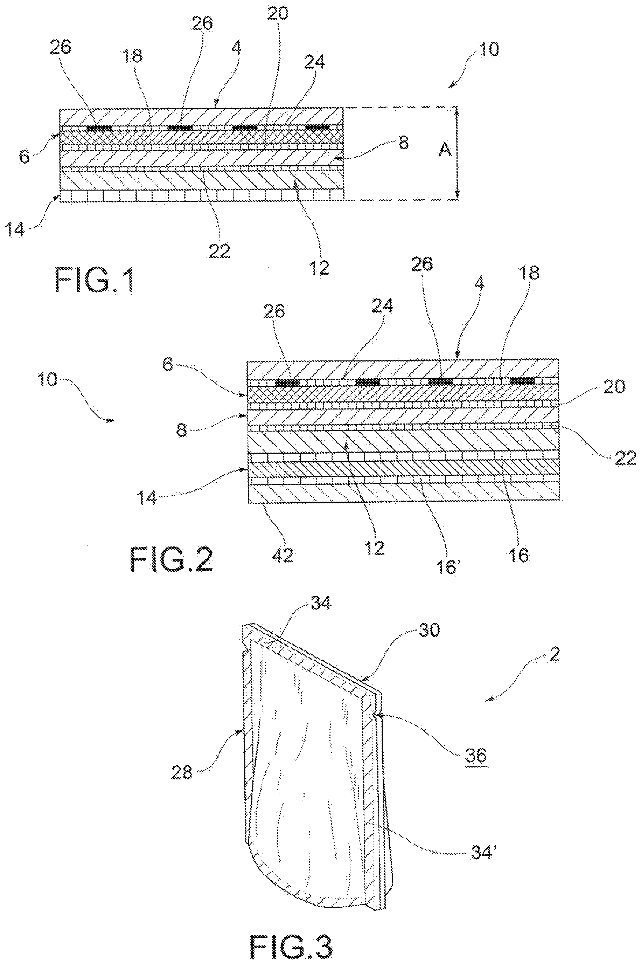

According to an embodiment, the first 4, optionally the second 6, the fourth 12 and optionally the third 8 layer adhere to each other indirectly, through adhesive layers 18, 20, 22 interposed between them. In this regard, see, for example, the schematisations of Figures 1 and 2.

According to a particularly advantageous embodiment, the protective layer 14 serves at least partly as a filter or physical barrier for said fatty or oily substances, in order to reject, at least partly, the migration of the latter through the thickness of the protective layer 14 and prevent contamination of the crystallised polyolefins of the fourth layer 12 by the fatty/oily substances.

Merely by way of example, such a filter or barrier could be effective for a time of at least three months at a temperature of about 40°C, or for at least six months (for example, for about one year) at room temperature.

According to various variants, the protective layer 14 comprises or consists of polyethylene, low density polyethylene optionally linear, medium density polyethylene optionally linear, high density polyethylene, ultra high molecular weight polyethylene, polypropylene, homopolymer polypropylene, random copolymer polypropylene, ethylene vinyl alcohol, ionomers, and/or combinations thereof.

Merely by way of example, the ionomers could include sodium ions and/or zinc ions.

According to an advantageous embodiment, the protective layer 14 comprises or consists of a polar polymeric layer. According to this variant, the film 10 could comprise an amphipathic coupling layer 16, 16' at least on the side facing the fourth layer 12.

The presence of a polar layer preferably requires at least one amphipathic coupling layer 16, 16' that, by virtue of its dual polar/apolar functionality, is able to combine a layer with polar characteristics with the fourth layer, preferably apolar.

According to the schematised embodiments, the protective layer 14 could be in direct contact with the fourth layer 12 (Figure 1), or could be separated from the fourth layer 12 by an amphipathic coupling layer 16 (Figure 2).

In the presence of a protective layer 14 of polar nature, the flexible film 10 could further comprise a product-contact layer 42, positioned on the side opposite to the first layer 4.

For example, the product-contact layer 42 could be apolar.

Advantageously, the product-contact layer 42 is connected to the protective layer through an amphipathic coupling layer 16'.

According to a variant, the product-contact layer 42 could include, or consist of random polypropylene copolymer, or could be selected from among any of the polymers mentioned above in relation to the fourth layer 14.

According to these last variants, the flexible film 10 would therefore have a double barrier with respect to the fatty/oily substances, for which it would be particularly suitable for contact with products with a high content of oils and fats.

Optionally, at least the surface 24 of the first layer 4 facing the fourth layer 12 comprises graphic elements 26, for example printed.

The aforesaid objective is also achieved by an easy-opening bag 1, 2 with the following characteristics.

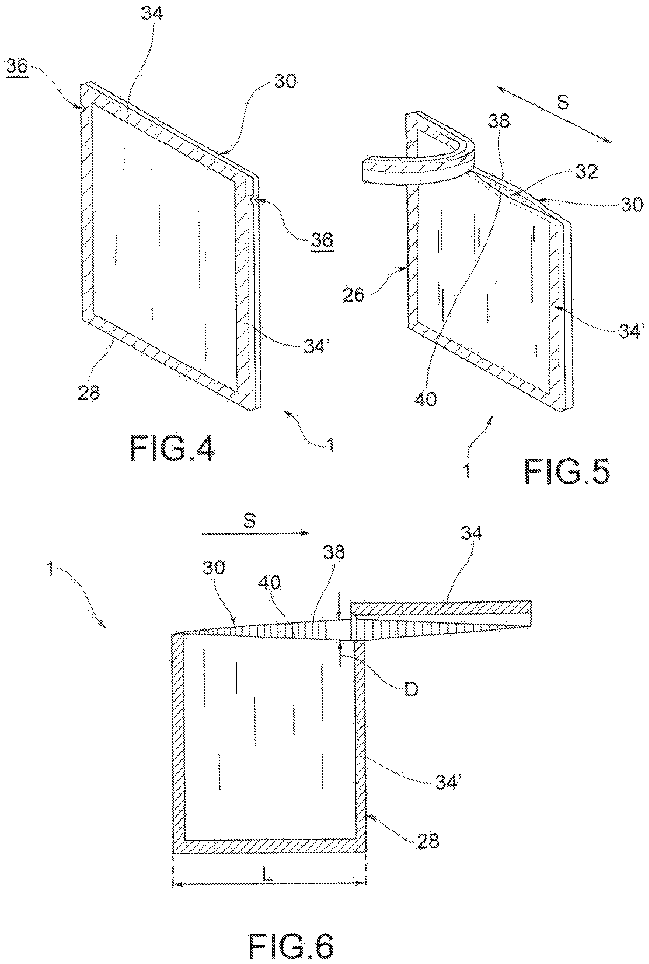

According to the embodiments shown, this bag 1, 2 could be shaped in a substantially flat manner (Figure 4), or could be of the stand-up type (Figure 3).

The bag 1, 2 comprises at least a pair of walls 28, 30, which together delimit an internal compartment 32 to receive fatty or oily substances, where such walls 28, 30 are at least partially thermo-welded to each other to hermetically close the internal compartment 32.

More precisely, the walls 28, 30 are welded along the side edges 34, 34', for example in the number of at least three or at least four edges, where the walls are preferably of a polygonal shape.

One or both of the aforesaid walls 28, 30 are made at least partly (for example completely) from the flexible film 10 according to any of the embodiments illustrated previously.

Preferably, the walls 28, 30 could be thermo-welded to each other through the protective layer 14, or through the pair of protective layers of the two walls facing each other.

Preferably, the internal compartment 32 is at least partially occupied by a cosmetic or food product, where the protective layer 14 could be in contact with such product (Figure 1), or could be separated from such product through the product-contact layer 42.

According to a preferred embodiment, the internal compartment 32 is resistant to an external compression of at least 1,5 tons (for example about 3 tons) for at least 1 minute, in particular without such compartment bursting.

It follows that the walls 28, 30 are joined together securely enough and/or have a wall thickness sufficiently high to ensure that such bag 1, 1' withstands the aforesaid applied compression.

According to a variant, the walls 28, 30 delimit a plurality of side edges 34, 34' welded together where, in correspondence of at least one 34, 34' of said edges, at least one guide notch 36 is formed for tearing at least part of said edge from the remaining portion of the bag.

In this regard, Figure 3 shows a bag 2 with only one guide notch, while Figure 4 shows a bag 1 with a pair of opposed notches.

Therefore the notch facilitates the first tearing of the side edge, and determines the tearing direction S of the edge through the crystallised polyolefins, such tearing taking place in a substantially linear manner by virtue of the polyolefins.

According to a particularly advantageous variant, the divarication value or ratio D/L between the overall length L of a side edge 34 the aforesaid bag, and the maximum distance D between the torn flaps 38, 40 of opposite walls 28, 30 in correspondence of the side edge 34 is approximately comprised in the range 0.02 to 0.1.

As regards the divarication value, reference is also made to document EP1769908A1 of the same Applicant.

This invention will now be illustrated according to several non-limiting examples.

In these examples, the columns from left to right identify, in this order, the layer considered, its thickness expressed in micrometres, the percentage by weight of the layer components, the chemical nature of such components, the trade name of a possible industrial product usable for each component, and finally the manufacturer of the industrial product.

These examples focus primarily on the fourth layer and layers successive to the fourth, but does not affect the fact that the first layer according to the invention is always present and also the second and third layers as defined above.

**Example 1:**

| | | | | Product name | Produce |
|---|---|---|---|---|---|
| fourth layer | 60µ | 47% | LLDPE | Innovex LL6608AF | Ineos |
| | | 43% | crystallised polyolefins | Topas® 8007F-400 | Topas |
| | | 10% | LDPE | LD 158 BW | ExxonMobil |
| protective layer | 15µ | 100% | LMDPE | innovex LL6910AA | Ineos |
| Overall thickness: | 75µ | | | | |

**Example 2:**

| | | | | Product name | Producer |
|---|---|---|---|---|---|
| fourth layer | 60µ | 47% | LLDPE | Innovex LL6608AF | Ineos |
| | | 43% | crystallised polyolefins | APL 6015T | Mitsui |
| | | 10% | LDPE | LD 158 BW | ExxonMobil |
| protective layer | 40µ | 100% | LMDPE | Innovex KL6910AA | Ineos |
| Overall thickness: | 100µ | | | | |

**Example 3:**

| | | | | Product name | Producer |
|---|---|---|---|---|---|
| fourth layer | 40µ | 47% | LLDPE | Innovex LL6608AF | Ineos |
| | | 43% | crystallised polyolefins | AFL 6015T | Mitsui |
| | | 10% | LDPE | LD 158 BW | ExxonMobil |
| amphipathic layer | 3µ | 100% | | Admer NF458A | Mitsui |
| protective layer | 3µ | 100% | EVOH | EVAL F171 | Kuraray |
| amphipathic layer | 3µ | 100% | | Admer NF458A | Mitsui |
| product-contact layer | 26µ | 90% | LLDPE | Innovex LL6608AF | Ineos |
| | | 10% | LDPE | LD 158 BW | ExxonMobil |
| Overall thickness: | 75µ | | | | |

**Example 4:**

| | | | | Product name | Producer |
|---|---|---|---|---|---|
| fourth layer | 60µ | 57% | PP random copolymer | Moplen RP320M | Lyondellbasell |
| | | 43% | crystallised polyolefins | Topas® 8007F-400 | Topas |
| protective layer | 15µ | 100% | PP homopolymer | Moplen HP420M | Lyondellbasell |
| Overall thickness: | 75µ | | | | |

**Example 5:**

| | | | | Product name | Producer |
|---|---|---|---|---|---|
| fourth layer | 40µ | 57% | PP random copolymer | Mοplen RP320M | Lyondellbasell |
| | | 43% | crystallised polyolefins | Topas® 8007F-400 | Topas |
| amphipathic layer | 3µ | 100% | | Admer NF458A | Mitsui |
| protective layer | 3µ | 100% | EVOH | EVAL F171 | Kuraray |
| amphipathie layer | 3µ | 100% | | Admer NF458A | Mitsui |
| product-contact layer | 26µ | 100% | PP random copolymer | Moplen RP320M | Lyondellbasell |
| Overall thickness : | 75µ | | | | |

In the preceding examples the abbreviations used have the following meaning: LLDPE = linear low density polyethylene; LDPE = low density polyethylene; LMDPE = linear medium density polyethylene; PP = polypropylene; EVOH = ethylene vinyl alcohol.

Innovatively, the flexible film and bag of this invention allow brilliantly solving the drawbacks of the prior art.

More precisely, the structure of the film and bag allow preserving the easy-opening or tearing characteristics over time, by virtue of the slowing or impossibility of the oily/greasy substances to reach the crystallised polyolefins.

Advantageously, the film and the bag of this invention allow guaranteeing a reliable sealed closure of the environment in which the product is contained.

Advantageously, the film and the bag object of this invention were designed to ensure resistance to high external pressure.

Advantageously, the film and bag of this invention allow achieving considerable economies of manufacture, by virtue of the fact that specific processing does not require supplementary or additional equipment respect to those required in this sector.

Advantageously, the film and bag of this invention substantially completely use materials destined to the union of the components, with no waste.

Advantageously, the film and the bag of this invention are particularly effective in creating a barrier to the fourth layer, since the appropriate selection of the polarities provides a reliable partition of the materials.

Advantageously, the film and bag of this invention have wall thicknesses no greater with respect to the corresponding products according to the known technique.

To the embodiments of the aforesaid flexible film and bag, one skilled in the art, in order to meet specific needs, may make variants or substitutions of elements with others functionally equivalent.

Even these variants are contained within the scope of protection, as defined by the following claims.

Moreover, each of the variants described as belonging to a possible embodiment can be realised independently of the other variants described.

## Claims

1. Flexible film (10) for packaging comprising, joined together in a preferably indirect manner:
- a first layer (4) or outer layer comprising or consisting of polyester;
- a second metallic layer (6), configured to create a barrier through said film (10) with respect to moisture, gases and/or light;
- a third layer (8) comprising or consisting of polyester;
- a fourth layer (12) comprising crystallised cyclic olefin copolymers (COC) configured to promote a substantially linear tearing of said film (10) .along at least a given tearing direction (S);
- a protective layer (14) or inner layer, comprising or consisting of a thermoplastic polymer, free of crystallised cyclic olefin copolymers and covering at least part of the fourth layer (12) in order to prevent/limit the migration of fatty or oily substances through its thickness, towards the fourth layer (12).

2. Flexible film according to the preceding claim, wherein the protective layer (14) makes at least partly a filter or physical barrier for said fatty or oily substances, in order to reject the migration of the latter through the thickness of the protective layer (14) and prevent contamination of the crystallised polyolefins of the fourth layer (12), e.g. for a time of at least three months at a temperature of about 40°C.

3. Flexible film according to any of the preceding claims, wherein the protective layer (14) comprises or consists of polyethylene, low density polyethylene optionally linear, medium density polyethylene optionally linear, high density polyethylene, ultra high molecular weight polyethylene, polypropylene, homopolymer polypropylene, random copolymer polypropylene, ethylene vinyl alcohol, ionomers, or combinations thereof.

4. Flexible film according to any of the preceding claims, wherein the protective layer (14) comprises or consists of a polar polymer layer, and comprising an amphipathic coupling layer (16, 16') at least on the side facing the fourth layer (12).

5. Flexible film according to the preceding claim, comprising an apolar product-contact layer (42) positioned on the opposite side with respect to the first layer (4) and connected to the protective layer through an amphipathic coupling layer (16').

6. Flexible film according to any of the preceding claims, wherein the protective layer (14) has a thickness in the range of about 10-30 pm.

7. Flexible film according to any one of the preceding claims, wherein the first (4), second (6), fourth (12) and optionally third layer (8) indirectly adhere to each other through adhesive layers (18, 20, 22), and wherein the protective layer (14) is in direct contact with the fourth layer (12) or is separated from the fourth layer (12) by an amphipathic coupling layer (16, 16').

8. Flexible film according to any of the preceding claims, wherein the first (4) and the third (8) layer comprise or consist of polyethylene terephthalate (PET), and wherein at least the surface (24) of the first layer (4) facing the fourth layer (12) comprises printed graphic elements (26).

9. Flexible film according to any of the preceding claims, wherein the fourth 1 ayer (12) comprises the crystallised cyclic olefin copolymer mixed, for example in a percentage equal to or lower than 99%wt, with polyethylene, low density polyethylene optionally linear, medium density polyethylene optionally linear, high density polyethylene, ultra high molecular weight polyethylene, polypropylene, homopolymer polypropylene, random copolymer polypropylene and combinations thereof.

10. Flexible film according to any of the preceding claims, wherein the overall thickness (A) of said film (10) is approximately in the range of 70-200 µm.

11. Easy-opening bag (1, 2), comprising at least a pair of walls (28, 30), which together delimit an internal compartment (32) to receive fatty or oily substances, said walls (28, 30) being at least partially thermo-welded to each other to hermetically close the internal compartment (32), wherein one or both of said walls (28, 30) are at least partly made of the flexible film (10) according to any of the preceding claims.

12. Bag according to the pre ceding claim, wherein the internal compartment (32) is at least partially occupied by a cosmetic or food product, the protective layer (14) being in contact with said product.

13. Bag according to any of claims 11 to 12, wherein the internal compartment (32) is resistant to an external compression, without bursting, of at least 1,5 tons for at least 1 minute, the walls (28, 30) being joined together securely enough and having sufficiently high wall thicknesses to ensure that such bag (1, 1') withstands said applied compression.

14. Bag according to any of claims 11 to 13, **characterised in that** it has a substantially flat or stand-up type shape.

15. Bag according to any of claims 11 to 14, wherein the walls (28, 30) delimit a plurality of side edges (34, 34') welded together wherein, in correspondence of at least one (34, 34') of said edges, at least one guide notch (36) is formed for tearing at least part of said edge from the remaining portion of the bag.

16. Bag according to any of claims 11 to 15, wherein the divarication value or ratio D/L between the overall length (L) of a side edge (34) of said bag, and the maximum distance (D) between the torn flaps (38, 40) of opposite walls (28, 30) in correspondence of the side edge (34) is approximately in the range 0.02 to 0.1.

## Patentansprüche

1. Flexibler Film (10) zum Verpacken, in einer vorzugsweise indirekten Weise miteinander verbunden umfassend:
- eine erste Schicht (4) oder äußere Schicht, umfassend oder bestehend aus Polyester;
- eine zweite metallische Schicht (6), welche dazu eingerichtet ist, eine Barriere durch den Film (10) bezüglich Feuchtigkeit, Gasen und/oder Licht zu erzeugen;
- eine dritte Schicht (8), umfassend oder bestehend aus Polyester;
- eine vierte Schicht (12), umfassend kristallisierte zyklische Olefin-Copolymere (COC), welche dazu eingerichtet sind, ein im Wesentlichen lineares Reißen des Films (10) entlang wenigstens einer gegebenen Reißrichtung (S) zu fördern;
- eine Schutzschicht (14) oder innere Schicht, umfassend oder bestehend aus einem thermoplastischen Polymer, welches frei von kristallisierten zyklischen Olefin-Copolymeren ist und wenigstens einen Teil der vierten Schicht (12) bedeckt, um das Wandern von fettigen oder öligen Substanzen durch seine Dicke in Richtung der vierten Schicht (12) zu verhindern/begrenzen.

2. Flexibler Film nach dem vorhergehenden Anspruch, wobei die Schutzschicht (14) wenigstens teilweise einen Filter oder eine physische Barriere für die fettigen oder öligen Substanzen darstellt, um das Wandern der letzteren durch die Dicke der Schutzschicht (14) zurückzuweisen und eine Kontamination der kristallisierten Polyolefine der vierten Schicht (12) zu verhindern, z.B. für eine Zeit von wenigstens drei Monaten bei einer Temperatur von etwa 40°C.

3. Flexibler Film nach einem der vorhergehenden Ansprüche, wobei die Schutzschicht (14) Polyethylen, optional lineares Polyethylen mit niedriger Dichte, optional lineares Polyethylen mit mittlerer Dichte, Polyethylen mit hoher Dichte, Polyethylen mit ultrahohem Molekulargewicht, Polypropylen, Homopolymer-Polypropylen, Copolymer-Polypropylen mit zufälliger Verteilung, Ethylen-Vinylalkohol, lonomere oder Kombinationen daraus umfasst oder daraus besteht.

4. Flexibler Film nach einem der vorhergehenden Ansprüche, wobei die Schutzschicht (14) eine polare Polymerschicht umfasst oder daraus besteht und eine amphipathische Kopplungsschicht (16, 16') wenigstens an der Seite umfasst, welche zu der vierten Schicht (12) weist.

5. Flexibler Film nach dem vorhergehenden Anspruch, umfassend eine unpolare Produktkontakt-Schicht (42), welche an der gegenüberliegenden Seite bezüglich der ersten Schicht (4) positioniert ist und mit der Schutzschicht durch eine amphipathische Kopplungsschicht (16') verbunden ist.

6. Flexibler Film nach einem der vorhergehenden Ansprüche, wobei die Schutzschicht (14) eine Dicke im Bereich von etwa 10-30 µm aufweist.

7. Flexibler Film nach einem der vorhergehenden Ansprüche, wobei die erste (4), zweite (6), vierte (12) und optional dritte Schicht (8) indirekt durch Haftschichten (18, 20, 22) aneinander anhaften, und wobei die Schutzschicht (14) in direktem Kontakt mit der vierten Schicht (12) ist oder von der vierten Schicht (12) durch eine amphipathische Kopplungsschicht (16, 16') getrennt ist.

8. Flexibler Film nach einem der vorhergehenden Ansprüche, wobei die erste (4) und die dritte (8) Schicht Polyethylen-Terephthalat (PET) umfasst oder daraus bestehen, und wobei wenigstens die Fläche (24) der ersten Schicht (4), welche zu der vierten Schicht (12) weist, gedruckte grafische Elemente (26) umfasst.

9. Flexibler Film nach einem der vorhergehenden Ansprüche, wobei die vierte Schicht (12) das kristallisierte zyklische Olefin-Copolymer umfassen, gemischt, beispielsweise in einem Anteil von gleich oder weniger als 99 Gewichts-%, mit Polyethylen, optional linearem Polyethylen mit niedriger Dichte, optional linearem Polyethylen mit mittlerer Dichte, Polyethylen mit hoher Dichte, Polyethylen mit ultrahohem Molekulargewicht, Polypropylen, Homopolymer-Polypropylen, Copolymer-Polypropylen mit zufälliger Verteilung und Kombinationen daraus.

10. Flexibler Film nach einem der vorhergehenden Ansprüche, wobei die Gesamtdicke (A) des Films (10) näherungsweise in dem Bereich von 70-200 µm liegt.

11. Einfach zu öffnender Beutel (1, 2), umfassend wenigstens ein Paar von Wänden (28, 30), welche zusammen ein Innenfach (32) begrenzen, um fettige oder ölige Substanzen aufzunehmen, wobei die Wände (28, 30) wenigstens teilweise miteinander wärmeverschweißt sind, um das Innenfach (32) hermetisch zu verschließen, wobei eine oder beide der Wände (28, 30) wenigstens teilweise aus dem flexiblen Film (10) nach einem der vorhergehenden Ansprüche hergestellt sind.

12. Beutel nach dem vorhergehenden Anspruch, wobei das Innenfach (32) wenigstens teilweise von einem Kosmetik- oder Nahrungsmittelprodukt eingenommen ist, wobei die Schutzschicht (14) in Kontakt mit dem Produkt ist.

13. Beutel nach einem der Ansprüche 11 bis 12, wobei das Innenfach (32) widerstandsfähig gegen eine externe Kompression, ohne zu platzen, von wenigstens 1,5 Tonnen für wenigstens 1 Minute ist, wobei die Wände (28, 30) miteinander sicher genug verbunden sind und ausreichend hohe Wanddicken aufweisen, um sicherzustellen, dass ein solcher Beutel (1, 1') der eingewirkten Kompression widersteht.

14. Beutel nach einem der Ansprüche 11 bis 13, **dadurch gekennzeichnet, dass** er eine im Wesentlichen ebene Form oder eine Form vom aufrecht stehenden Typ aufweist.

15. Beutel nach einem der Ansprüche 11 bis 14, wobei die Wände (28, 30) eine Mehrzahl von Seitenrändern (34, 34') begrenzen, welche miteinander verschweißt sind, wobei entsprechend wenigstens einem (34, 34') der Ränder wenigstens eine Führungskerbe (36) zum Abreißen wenigstens eines Teils des Rands von dem verbleibenden Abschnitt des Beutels gebildet ist.

16. Beutel nach einem der Ansprüche 11 bis 15, wobei der Spreizwert oder das Verhältnis D/L zwischen der Gesamtlänge (L) eines Seitenrands (34) des Beutels und der maximalen Distanz (D) zwischen den gerissenen Laschen (38, 40) von gegenüberliegenden Wänden (28, 30) entsprechend dem Seitenrand (34) näherungsweise in dem Bereich 0,02 bis 0,1 liegt.

## Revendications

1. Film souple (10) pour emballage comprenant, reliées entre elles, de préférence d'une manière indirecte :
- une première couche (4) ou couche extérieure comprenant ou constituée de polyester ;
- une deuxième couche métallique (6), configurée pour créer une barrière à travers ledit film (10) par rapport à l'humidité, aux gaz et/ou à la lumière ;
- une troisième couche (8) comprenant ou constituée de polyester ;
- une quatrième couche (12) comprenant des copolymères d'oléfines cycliques (COC) cristallisés configurée pour favoriser un déchirement sensiblement linéaire dudit film (10) le long d'au moins une direction de déchirement (S) donnée ;
- une couche de protection (14) ou couche intérieure, comprenant ou constituée d'un polymère thermoplastique, dépourvue de copolymères d'oléfine cyclique cristallisés et recouvrant au moins une partie de la quatrième couche (12) afin d'empêcher/limiter la migration de substances grasses ou huileuses à travers son épaisseur, vers la quatrième couche (12).

2. Film souple selon la revendication précédente, dans lequel la couche de protection (14) crée au moins partiellement un filtre ou une barrière physique pour lesdites substances grasses ou huileuses, afin de rejeter la migration de ces dernières à travers l'épaisseur de la couche de protection (14) et d'empêcher la contamination des polyoléfines cristallisées de la quatrième couche (12), par exemple pendant une durée d'au moins trois mois à une température d'environ 40 °C.

3. Film souple selon l'une quelconque des revendications précédentes, dans lequel la couche de protection (14) comprend ou est constituée de polyéthylène, de polyéthylène à faible densité optionnellement linéaire, de polyéthylène à densité moyenne optionnellement linéaire, de polyéthylène à densité élevée, de polyéthylène de poids moléculaire ultra-élevé, de polypropylène, de polypropylène homopolymère, de polypropylène à copolymères aléatoires, d'éthylène vinyle alcool, d'ionomères ou de combinaisons de ceux-ci.

4. Film souple selon l'une quelconque des revendications précédentes, dans lequel la couche de protection (14) comprend ou est constituée d'une couche de polymère polaire, et comprenant une couche de couplage amphipathique (16, 16') au moins sur le côté faisant face à la quatrième couche (12).

5. Film souple selon la revendication précédente, comprenant une couche de contact avec produit apolaire (42) positionnée sur le côté opposé par rapport à la première couche (4) et reliée à la couche de protection par le biais d'une couche de couplage amphipathique (16').

6. Film souple selon l'une quelconque des revendications précédentes, dans lequel la couche de protection (14) présente une épaisseur comprise dans la plage d'environ 10 - 30 µm.

7. Film souple selon l'une quelconque des revendications précédentes, dans lequel les première (4), deuxième (6), quatrième (12) et éventuellement troisième (8) couches adhèrent indirectement les unes aux autres par le biais de couches adhésives (18, 20, 22), et dans lequel la couche de protection (14) est en contact direct avec la quatrième couche (12) ou est séparée de la quatrième couche (12) par une couche de couplage amphipathique (16, 16').

8. Film souple selon l'une quelconque des revendications précédentes, dans lequel les première (4) et troisième (8) couches comprennent ou sont constituées de polyéthylène téréphtalate (PET), et dans lequel au moins la surface (24) de la première couche (4) faisant face à la quatrième couche (12) comprend des éléments graphiques imprimés (26).

9. Film souple selon l'une quelconque des revendications précédentes, dans lequel la quatrième couche (12) comprend le copolymère d'oléfines cycliques cristallisé mélangé, par exemple à un pourcentage égal ou inférieur à 99 % en poids, avec du polyéthylène, du polyéthylène à faible densité optionnellement linéaire, du polyéthylène à densité moyenne optionnellement linéaire, du polyéthylène à densité élevée, du polyéthylène de poids moléculaire ultra-élevé, du polypropylène, du polypropylène homopolymère, du polypropylène à copolymères aléatoires, et des combinaisons de ceux-ci.

10. Film souple selon l'une quelconque des revendications précédentes, dans lequel l'épaisseur globale (A) dudit film (10) est approximativement dans la plage de 70 à 200 µm.

11. Sac à ouverture facile (1, 2), comprenant au moins une paire de parois (28, 30), qui délimitent ensemble un compartiment interne (32) pour recevoir des substances grasses ou huileuses, lesdites parois (28, 30) étant au moins partiellement thermosoudées entre elles pour fermer hermétiquement le compartiment interne (32), dans lequel une ou les deux desdites parois (28, 30) sont au moins partiellement composées du film flexible (10) selon l'une quelconque des revendications précédentes.

12. Sac selon la revendication précédente, dans lequel le compartiment interne (32) est au moins partiellement occupé par un produit cosmétique ou alimentaire, la couche de protection (14) étant en contact avec ledit produit.

13. Sac selon l'une quelconque des revendications 11 à 12, dans lequel le compartiment interne (32) résiste à une compression externe, sans éclater, d'au moins 1,5 tonne pendant au moins 1 minute, les parois (28, 30) étant reliées entre elles de manière suffisamment sûre et ayant des épaisseurs de paroi suffisamment élevées pour s'assurer qu'un tel sac (1, 1') résiste à ladite compression appliquée.

14. Sac selon l'une quelconque des revendications 11 à 13, **caractérisé en ce qu'**il a une forme sensiblement à plat ou de type vertical.

15. Sac selon l'une quelconque des revendications 11 à 14, dans lequel les parois (28, 30) délimitent une pluralité de bords latéraux (34, 34') soudés entre eux dans lequel, en correspondance d'au moins un (34, 34') desdits bords, au moins une encoche de guidage (36) est formée pour déchirer au moins une partie dudit bord de la partie restante du sac.

16. Sac selon l'une quelconque des revendications 11 à 15, dans lequel la valeur de divarication ou le rapport D/L entre la longueur globale (L) d'un bord latéral (34) dudit sac, et la distance maximale (D) entre les rabats déchirés (38, 40) de parois opposées (28, 30) en correspondance du bord latéral (34) est approximativement dans la plage de 0,02 à 0,1.
